# FASCICULE DE BREVET EUROPEEN

(11) **EP 2 686 705 B1**
(45) Date de publication et mention de la délivrance du brevet: **17.07.2019**
(21) Numéro de dépôt: 12709067.8
(22) Date de dépôt: 12.03.2012
(51) Int. Cl.: G01T 1/36, G01T 1/40

(54) **DISPOSITIF ET PROCEDE DE SPECTROMETRIE PHOTONIQUE, PROCEDE DE CALIBRAGE DU DISPOSITIF ET UTILISATION DU DISPOSITIF**
PHOTONENSPEKTROMETRISCHE VORRICHTUNG UND VERFAHREN, VERFAHREN ZUR KALIBRIERUNG DER VORRICHTUNG UND VERWENDUNG DER VORRICHTUNG
PHOTONIC SPECTROMETRY DEVICE AND METHOD, METHOD FOR CALIBRATING THE DEVICE, AND USE OF THE DEVICE

(30) Priorité: 14.03.2011 FR 1152069
(43) Date de publication de la demande: 22.01.2014
(73) Titulaire: FRAMATOME, 92400 Courbevoie (FR)
(72) Inventeur: BERRUYER, Eric, F-26270 Loriol Sur Drôme (FR)
(74) Mandataire: Lavoix
(86) Numéro de dépôt international: PCT/EP2012/054256
(87) Numéro de publication internationale: WO 2012/123404

(56) Documents cités:
- EP-A1- 1 956 392
- EP-A2- 0 256 902
- EP-A2- 2 246 711
- US-A- 3 009 062
- US-A- 3 124 679
- US-A- 4 317 033
- US-A1- 2009 134 337
- ALYOSHIN V I ET AL: "MULTICRYSTAL LOW-BACKGROUND GAMMA-SPECTROMETER", NUCLEAR INSTRUMENTS & METHODS IN PHYSICS RESEARCH, NORTH-HOLLAND PUBLISHING COMPANY. AMSTERDAM, NL, vol. 197, no. 2/3, 1 juin 1982 (1982-06-01), pages 341-346, XP001440349, ISSN: 0167-5087

## Description

La présente invention concerne le domaine de la spectrométrie photonique.

La production ou le recyclage de combustible nucléaire conduit à la production de coproduits, de déchets ou d'effluents. Il convient de vérifier que la teneur en matières radioactives de ces coproduits, déchets ou effluents est acceptable au regard de seuils réglementaires.

Par exemple, l'oxyde d'uranium (UxOy), et notamment le dioxyde d'uranium (UO2), est utilisé comme combustible nucléaire. L'oxyde d'uranium est obtenu par exemple par conversion d'hexafluorure d'uranium (UF₆) en oxyde d'uranium. La conversion est réalisée par exemple dans un four par circulation à contrecourant de poudre d'hexafluorure d'uranium et d'eau (H₂O). Un tel procédé de fabrication est décrit dans FR 2 771 725.

Cette conversion génère de l'acide fluorhydrique (HF) en tant que coproduit valorisable. Il convient de contrôler que la concentration en uranium dans l'acide fluorhydrique ne dépasse par des seuils réglementaires définis par l'autorité de sûreté nucléaire.

Pour ce faire, il est possible d'effectuer régulièrement des prélèvements et de les faire analyser par un laboratoire, par exemple à l'aide d'un spectromètre de masse, d'un spectrophotomètre d'absorption moléculaire...

Néanmoins, de telles analyses nécessitent la mise en oeuvre, par des personnels qualifiés, d'appareillages de laboratoire perfectionnés coûteux à acheter, à entretenir et à exploiter. Elles nécessitent une durée pouvant varier de plusieurs dizaines de minutes à une journée selon les préparations nécessaires et le type de mesure réalisée. Elles sont effectuées à intervalles de temps réguliers mais espacés. Ces analyses sont mal adaptées à la surveillance d'un processus industriel continu et imposent dans ce cas de réaliser des stockages intermédiaires et des traitements par lots sur certaines étapes du procédé industriel.

ALYOSHIN V I ET AL : « MULTICRYSTAL LOW-BACKGROUND GAMMA-SPETROMETER », NUCLEAR INSTRUMENTS & METHODS IN PHYSICS, NORTH-HOLLAND PUBLISHING COMPANY, AMSTERDAM, vol 197, no 2/3, 1 juin 1982 (1982-06-01) pages 341-346, ISSN:0167-5087 divulgue un spectromètre comprenant plusieurs cristaux, un bloc de sommation pour sommer les signaux fournis par les cristaux et un analyseur multicanal recevant la somme des signaux.

US2009/134337A1 divulgue un dispositif de spectrométrie photonique comprenant des spectromètres ayant des capteurs haute efficacité / basse résolution et des spectromètres ayant des capteurs basse efficacité / haute résolution, les spectres fournis par les spectromètres étant combinés par convolution.

Un but de l'invention est de proposer un dispositif de spectrométrie photonique adapté à la surveillance de processus industriels.

A cet effet, l'invention propose un dispositif de spectrométrie photonique selon la revendication 1. Des caractéristiques optionnelles sont définies aux revendications 2 à 10.

L'invention concerne également un procédé de spectrométrie photonique selon la revendication 11. Des modes de mise en oeuvre sont définis aux revendications 12 et 13.

L'invention concerne également un procédé de calibrage selon la revendication 14.

L'invention concerne encore l'utilisation d'un dispositif de spectrométrie photonique tel que défini ci-dessus conformément à la revendication 15.

L'invention et ses avantages seront mieux compris à la lecture de la description qui va suivre, donnée uniquement à titre d'exemple, et faite en référence aux dessins annexés sur lesquels :
- la figure 1 est une vue schématique illustrant un dispositif de spectrométrie photonique conforme à l'invention ;
- la figure 2 est une vue schématique d'un spectromètre photonique du dispositif de spectrométrie photonique de la figure 1 ;
- les figures 3 et 4 sont des vues en coupe et de dessus d'un ensemble de détection du dispositif de la figure 1 ;
- la figure 5 est un diagramme illustrant un spectre obtenu à l'aide d'un spectromètre du dispositif de spectrométrie photonique de la figure 1 ;
- les figures 6 à 8 sont des vues schématiques d'installations de production ou de recyclage de combustible nucléaire incorporant un dispositif de spectrométrie photonique selon l'invention.

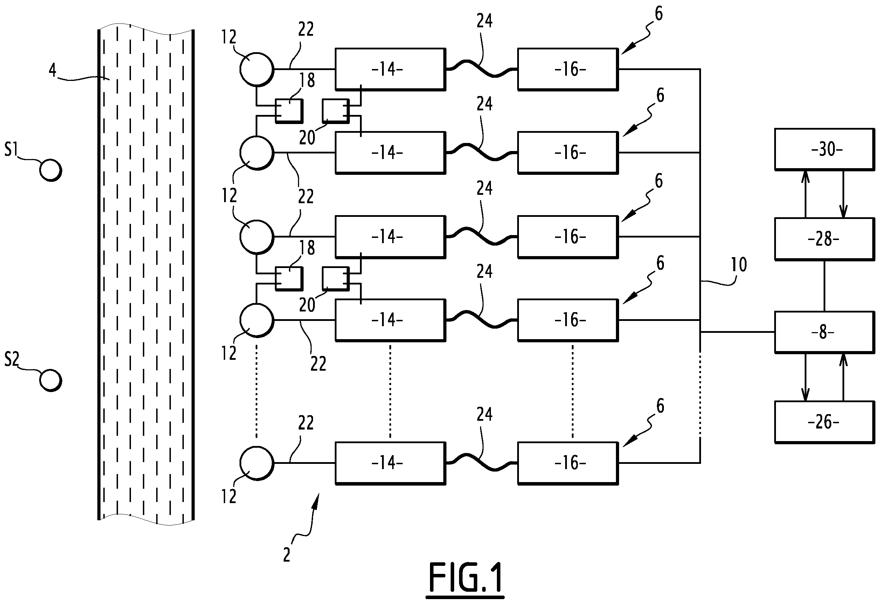

Le dispositif de spectrométrie photonique 2 illustré sur la figure 1 est propre à mesurer les rayonnements émis par un produit 4.

Le dispositif de spectrométrie photonique 2 comprend plusieurs spectromètres 6 photoniques et un module électronique de traitement 8, ci-après « module de traitement ». Le dispositif de spectrométrie photonique 2 comprend un bus 10 d'échange de données reliant le module de traitement 8 à la sortie de chaque spectromètre 6.

Chaque spectromètre 6 est propre à établir un spectre du nombre de photons détectés pendant un intervalle de temps ou intervalle de mesure, en fonction de l'énergie des photons détectés. Chaque spectromètre 6 est conçu pour assurer la linéarité de sa réponse (spectre en énergie) par rapport à l'information présentée à son entrée (énergie de chaque photon).

Chaque spectromètre 6 comprend un unique capteur 12 de rayonnements, un module électronique de détection et de quantification 14, ci-après « module de détection », et un module électronique d'analyse 16, ci-après «module d'analyse », associés.

Le capteur 12 est propre à détecter des photons gamma, appelés aussi rayons gamma, et/ou des photons X, appelés aussi rayons X, et à émettre pour chaque photon détecté un signal de sortie électrique proportionnel à l'énergie du photon détecté. Le capteur 12 est alimenté en énergie électrique par une source d'énergie électrique haute tension 18.

Le module de détection 14 reçoit en entrée le signal de sortie du capteur 12 associé et délivre en sortie un signal numérique représentatif de la valeur de l'énergie de chaque photon détecté par le capteur 12. Le module de détection 14 est alimenté en énergie électrique par une source d'énergie électrique basse tension 20.

Le module d'analyse 16 est propre à compter les signaux émis par le module de détection 14, chaque signal correspondant à un photon détecté par le capteur 12, et à établir un spectre de mesures de la quantité de photons détectés par le capteur 12 en fonction de l'énergie (keV) pour un intervalle de mesure.

Le capteur 12, le module de détection 14 et le module d'analyse 16 sont séparés et reliés entre eux par des liaisons de transmission de données. Le capteur 12 fournit en sortie un signal électrique. L'entrée du module de détection 14 est reliée à la sortie capteur 12 par une liaison filaire 22. Le module de détection 14 émet un signal de sortie numérique optique. L'entrée du module d'analyse 16 est reliée à la sortie du module de détection 14 par une liaison optique 24, typiquement une fibre optique.

Les spectromètres 6 sont propres à fonctionner simultanément et à traiter simultanément les photons émis par le produit 4.

Le module de traitement 8 est relié à la sortie de chaque spectromètre 6 par le bus 10. Le module de traitement 8 est configuré pour effectuer un traitement spécifique des spectres de mesures acquis simultanément sur le même intervalle de temps et établis par les spectromètres 6 afin de pouvoir délivrer un spectre global représentatif déterminé à partir de l'ensemble des spectres de mesures.

Le module de traitement 8 est relié à une interface homme/machine 26 pour l'affichage de résultats et/ou la réception d'instructions.

Le module de traitement 8 est relié à une unité de pilotage 28 apte à utiliser le résultat fourni par le module de traitement 8 pour piloter une installation 30, par exemple une installation de production ou de recyclage de combustible nucléaire ou une installation d'évacuation d'effluents d'une usine de production et/ou de recyclage de combustible nucléaire.

Les spectromètres 6 sont identiques. Les capteurs 12 des spectromètres 6 sont identiques, les modules de détection 14 des spectromètres 6 sont identiques et les modules d'analyse 16 des spectromètres 6 sont identiques.

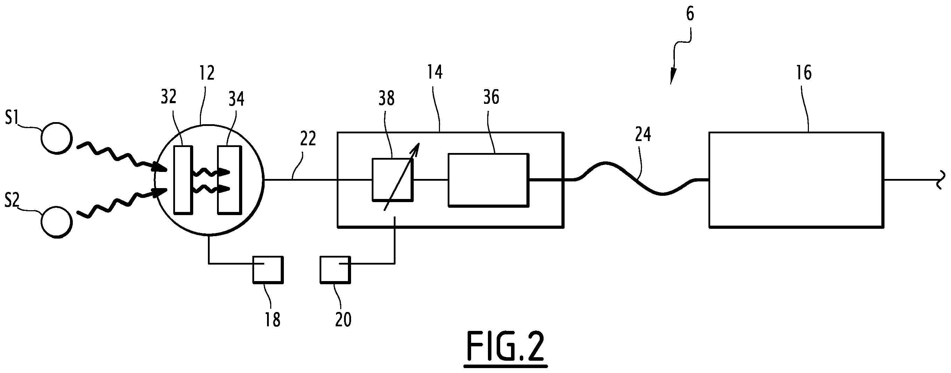

Tel que représenté sur la figure 2 illustrant un spectromètre 6, le capteur 12 de chaque spectromètre 6 est un capteur à scintillation. Il comprend un cristal 32 scintillateur par exemple un scintillateur inorganique de type alcalin halide dopé tel que par exemple Nal(TI) ou de type composé minéral tel que LaBr₃(Ce) et un photomultiplicateur 34 couplé optiquement au cristal 32. Lorsqu'un photon est absorbé par le cristal 32, celui-ci émet un signal lumineux dont l'énergie est proportionnelle à celle du photon absorbé. Le photomultiplicateur 34 délivre en sortie un signal électrique proportionnel à l'énergie lumineuse émise par le cristal 32.

Le capteur 12 délivre donc, en sortie, un signal électrique analogique proportionnel à l'énergie libérée par le photon dans le cristal 32.

Le module de détection 14 comprend un convertisseur analogique/numérique 36 pour convertir le signal d'entrée analogique en signal de sortie numérique.

Le module de détection 14 est réglable de façon à ajuster le signal de sortie du module de détection 14 en fonction du signal d'entrée qu'il reçoit. Pour ce faire le module de détection 14 comprend un régulateur proportionnel 38 propre à appliquer un coefficient de multiplication au signal qu'il reçoit. Le régulateur proportionnel 38 est réglable de manière à pouvoir régler le coefficient multiplicateur.

En revenant à la figure 1, le dispositif de spectrométrie photonique 2 comprend au moins une source étalon et de préférence au moins deux sources étalons S1, S2 associées à la pluralité de spectromètres 6. Chaque source étalon S1, S2 émet un spectre de photons déterminé. Les sources étalons S1, S2 émettent des spectres de photons différents. De préférence, chaque source étalon S1, S2 émet un spectre présentant une raie spectrale caractéristique autour d'une énergie de référence ou raie de référence, et les sources étalons S1, S2 possèdent une ou des raies de référence à des énergies de référence différentes.

Les sources étalons S1, S2 sont disposées de façon à assurer une irradiation identique de chaque capteur 12 de chaque spectromètre 6. Par exemple, pour assurer une irradiation identique, chaque source étalon S1, S2 est disposée à équidistance des capteurs 12 des spectromètres 6. En d'autres termes les spectromètres 6 utilisent au moins une source étalon S1, S2 commune, de préférence deux sources étalons S1, S2 communes.

Les sources étalons S1, S2 sont séparées des spectromètres 6 et en particulier du capteur 12 de chaque spectromètre 6. Chaque spectromètre 6 est donc associé à au moins une source étalon S1, S2 séparée du capteur 12 de ce spectromètre 6, de préférence à deux sources étalons S1, S2 séparées du capteur 12 de ce spectromètre 6.

Le module de traitement 8 est propre à analyser individuellement chaque spectre de mesures pendant un intervalle de mesure donné de façon à comparer, pour chaque spectromètre 6, la raie spectrale caractéristique mesurée correspondant à chaque source étalon S1, S2 à la raie de référence correspondante, à calculer les constantes des fonctions affines à appliquer pour faire coïncider les raies spectrales caractéristiques mesurées des sources S1, S2 avec leurs raies de références, à appliquer les fonctions affines en tout point du domaine spectral pour recaler le spectre de mesures et déterminer ainsi un spectre net correspondant et enfin à sommer le spectre net issu de chacun des spectromètres 6 pour obtenir le spectre global.

Le recalage est effectué en énergie et/ou en efficacité. Le recalage en énergie consiste à déterminer une fonction affine pour faire correspondre l'énergie de la raie spectrale caractéristique mesurée correspondant à la ou chaque source étalon S1 et S2 à l'énergie de la raie de référence de la ou chaque source étalon S1, S2. Le recalage en efficacité consiste à déterminer une fonction affine pour faire correspondre le nombre de photons détectés de la raie spectrale caractéristique mesurée correspondant à la ou chaque source étalon S1 et S2 au nombre de photons attendu - correspondant à l'efficacité de détection initiale du capteur 12 du spectromètre 6 concerné - pendant l'intervalle de mesure.

Le module de traitement 8 recevant les spectres de mesures et/ou le module d'analyse 16 établissant les spectres de mesures est/sont avantageusement propre(s) à les stocker au moins temporairement. Ceci permet de consulter les spectres de mesures par exemple à des fins de qualification ou de contrôle ou en cas d'anomalie ou d'incident de fonctionnement.

Des moyens de traitement sont formés par le module de traitement 8 propres à déterminer un spectre net à partir de chacun des spectres de mesures fournis par les spectromètres 6 et à déterminer un spectre global résultant de la sommation des spectres nets.

Dans une variante, le module d'analyse 16 de chaque spectromètre 6 est propre à établir le spectre de mesures et à réaliser son traitement pour déterminer le spectre net correspondant. Dans ce cas, les moyens de traitement sont formés par le module d'analyse 16 de chaque spectromètre 6 et par le module de traitement 8 qui reçoit les spectres nets déterminés par les modules d'analyse 16 et réalise leur sommation pour obtenir le spectre global.

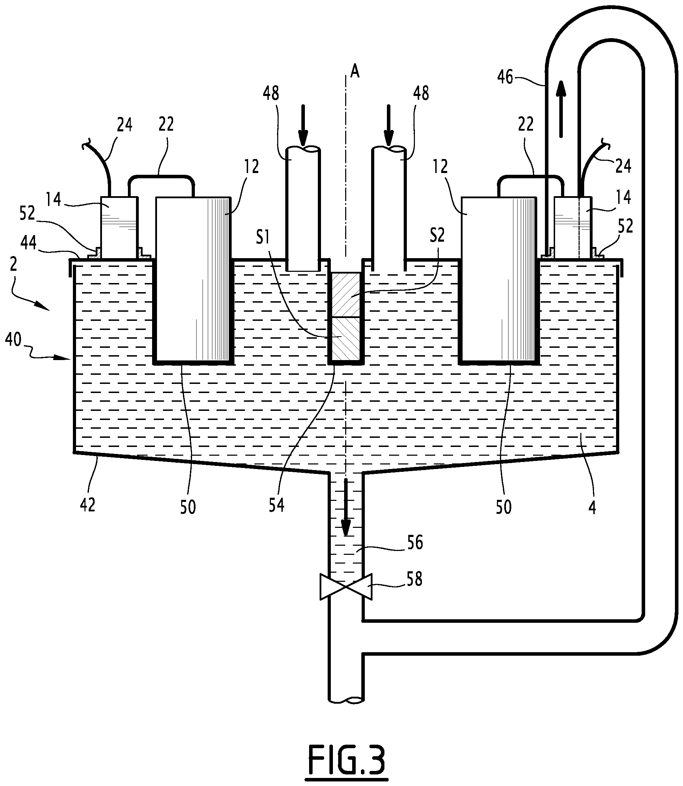

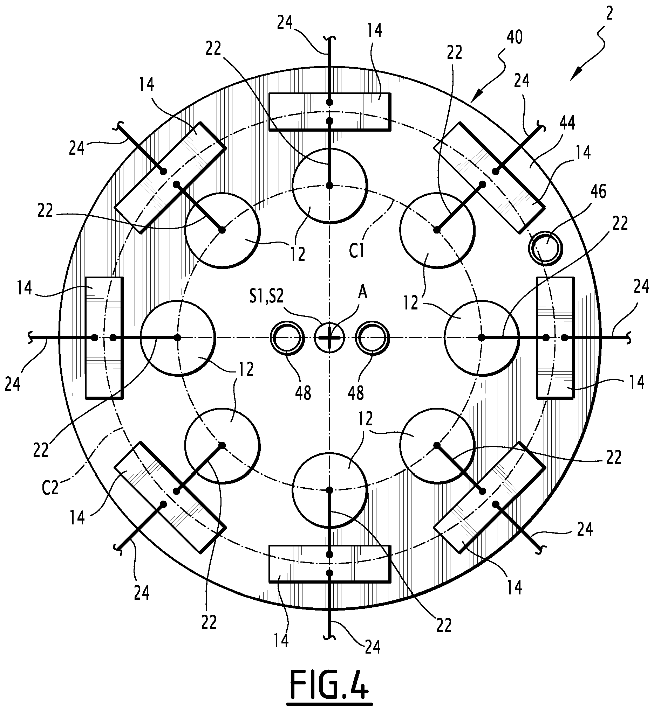

Tel qu'illustré sur les figures 3 et 4, les capteurs 12 sont régulièrement répartis suivant un cercle de capteurs C1 imaginaire centré sur un axe de symétrie A. Tel qu'illustré sur la figure 4, les capteurs 12 sont au nombre de 8 et répartis autour de l'axe A, avec la même valeur métrique de rayon et suivant un pas angulaire régulier égal à 45°.

Les sources étalons S1, S2 sont disposées au centre du cercle de capteur C1. Chaque source étalon S1, S2 se situe donc à équidistance des capteurs 12. Il en résulte que chaque capteur 12 reçoit statistiquement sensiblement la même quantité de photons en provenance des sources étalons S1, S2, durant un même intervalle de mesure.

Le dispositif de spectrométrie photonique 2 comprend un pot 40 de circulation du produit 4 à contrôler, présentant une symétrie de révolution autour de l'axe de symétrie A. Il en résulte que chaque capteur 12 reçoit statistiquement sensiblement la même quantité de photons en provenance du produit 4 présent dans le pot 40.

Les capteurs 12 sont disposés sur le pot 40 de façon que l'espace de réception du produit 4 dans le pot 40 se situe entre les capteurs 12 et autour des capteurs 12. Ceci assure une bonne irradiation des capteurs 12 par les photons émis par le produit 4.

Tel qu'illustré sur les figures 3 et 4, le pot 40 comprend une cuve 42 de section circulaire s'étendant suivant l'axe de symétrie A et un couvercle 44 de contour circulaire fermant, hermétiquement si nécessaire, la cuve 42.

Le couvercle 44 est de forme générale circulaire. Le couvercle 44 comprend au moins un dispositif de remplissage 48 disposé à proximité du centre du couvercle 44 coïncidant avec l'axe A et assurant le remplissage rapide du pot 40 et au moins un dispositif de déverse 46 positionné à la périphérie du couvercle 44 et assurant l'évacuation du trop-plein du pot 40. Tel qu'illustré sur les figures 3 et 4, lorsque plusieurs dispositifs de remplissage 48 sont présents, les dispositifs de remplissage 48 sont espacés et régulièrement répartis suivant un cercle centré sur l'axe A. Selon la configuration de l'installation 30, le dispositif de remplissage 48 peut également être disposé sur une face latérale ou sur la face inférieure de la cuve 42.

La cuve 42 comprend au moins un dispositif de vidange 56 s'alimentant au point le plus bas de la cuve 42 et assurant le vidage du pot 40 commandé par la vanne d'évacuation 58. Tel qu'illustré sur la figure 3, la cuve 42 comprend un dispositif de vidange 56 s'alimentant au centre du fond de la cuve 42.

Le couvercle 44 comprend une pluralité d'alvéoles de capteur 50 faisant saillie vers l'intérieur du pot 40 et ouvertes vers l'extérieur du pot 40. Chaque alvéole de capteur 50 définit dans le couvercle 44 un logement de réception d'un capteur 12. Les alvéoles de capteur 50 sont disposées suivant le cercle de capteurs C1. Les alvéoles de capteur 50 sont angulairement régulièrement réparties autour de l'axe A.

Le couvercle 44 comprend une pluralité de dispositifs de maintien 52 de module de détection 14 ouverts vers l'extérieur du pot 40. Chaque dispositif de maintien 52 définit en saillie sur l'extérieur du couvercle 44 un logement de réception d'un module de détection 14. Les dispositifs de maintien 52 sont disposés suivant un cercle de modules de détection C2 imaginaire centré sur l'axe A. Les dispositifs de maintien 52 sont angulairement régulièrement répartis autour de l'axe A.

Le couvercle 44 comprend une alvéole de source étalon 54 centrée sur l'axe A. L'alvéole de source étalon 54 est disposée entre les dispositifs de remplissage 48. Les sources étalons S1, S2 sont disposées dans l'alvéole de source étalon 54. Chaque source étalon S1, S2 se situe au centre du cercle de capteurs C1 suivant lequel sont disposés les capteurs 12.

Le pot 40 est disposé à proximité d'une installation 30. L'ensemble de détection formé par le pot 40 de mesurage, les capteurs 12 et leurs modules de détection 14 associés est alimenté en produit 4 à contrôler, par une voie directe ou par une voie dérivée (voie parallèle) de l'installation 30.

Le pot 40 est par exemple disposé en sortie d'un four de production d'uranium et d'acide fluorhydrique, sur une sortie d'acide fluorhydrique liquide, dans une pièce confinée.

Les modules de détection 14 disposés à proximité des capteurs 12 permettent d'utiliser des liaisons filaires 22 courtes entre les modules de détection 14 et les capteurs 12, afin de maximiser le rapport signal sur bruit en détection.

Les modules d'analyse 16 associés aux modules de détection 14 et aux capteurs 12 peuvent être placés à l'extérieur de la pièce confinée. La liaison optique 24 par fibre optique assure une transmission de données d'un débit élevé et fiable sur des distances élevées, par exemple de plusieurs dizaines de mètres.

En fonctionnement, pendant un intervalle de temps déterminé, les spectromètres 6 mesurent simultanément les photons émis par le produit 4 présent dans le pot 40 de mesurage. Chaque spectromètre 6 fournit un spectre de mesures. Après recalage individuel de chaque spectre de mesures pour déterminer un spectre net, le module de traitement 8 additionne les spectres nets pour déterminer un spectre global résultant de la sommation des spectres nets. A partir du spectre global, le module de traitement 8 détermine une ou plusieurs mesures, par exemple une concentration d'uranium 235 dans le produit 4.

Le dispositif de spectrométrie photonique 2 permet de remplacer une mesure réalisée par un appareillage de laboratoire sur un échantillon du produit 4 sur une période de temps T, par n mesures (n>1) simultanées sur le produit 4 en sortie d'installation 30, réalisées par plusieurs spectromètres 6 tout en garantissant un résultat de même précision statistique acquis sur une durée plus courte, pouvant être, par exemple, réduite à T/n.

Le dispositif de spectrométrie photonique 2 permet de réaliser des mesures satisfaisantes sur un intervalle de mesure de quelques minutes, par exemple de 1 à 5 minutes, alors que les techniques classiques d'échantillonnage et d'analyse à l'aide d'appareillages de laboratoire nécessitent plusieurs dizaines de minutes voire plusieurs heures et, selon le produit à prélever, une intervention humaine en milieu éventuellement à risques telle qu'une zone confinée.

Le dispositif de spectrométrie photonique 2 permet donc de réaliser des mesures très rapidement, sur un intervalle de mesure compatible avec la surveillance d'un processus industriel ou le pilotage d'un processus industriel.

Néanmoins, la spectrométrie est une mesure de type statistique. Tous les photons émis par le produit 4 pendant l'intervalle de mesure ne sont pas nécessairement détectés. Chaque capteur 12 ne détecte qu'une partie des photons qui atteignent le capteur 12.

Le principe de l'addition des mesures fournies par différents spectromètres 6 ne peut être considéré comme physiquement justifié que si le dispositif de spectrométrie photonique 2 vérifie le principe d'ergodicité.

Cela signifie en pratique que les différentes voies de mesurage d'une même grandeur doivent pouvoir être considérées comme identiques ou sensiblement identiques de façon à fournir des résultats identiques ou suffisamment identiques dans les mêmes conditions de mesurage.

Pour satisfaire à cette condition ou au moins s'en approcher de manière suffisante, le dispositif de spectrométrie photonique 2 comprend plusieurs spectromètres 6 identiques.

En pratique, du fait des tolérances de fabrications inévitables, les capteurs 12, bien qu'étant identiques, présentent une dispersion et, placés dans les mêmes conditions, fournissent des mesures différentes.

La valeur des signaux fournis par un capteur 12 dépend en outre de son alimentation haute tension. La modification même faible en valeur relative du voltage de cette alimentation haute tension modifie sensiblement la valeur des signaux fournis. L'ajustement de ce voltage individuellement pour chaque capteur 12 pourrait permettre en théorie de calibrer les capteurs 12, mais cet ajustement individuel impose une source d'énergie électrique haute tension 18 spécifique par capteur 12 et n'est pas industriel du fait de la maintenance importante qu'il implique. Pour répondre aux contraintes d'un procédé industriel, il est préférable de conserver une valeur de haute tension unique, ce qui permet éventuellement l'emploi d'une seule source d'énergie électrique haute tension 18 pour l'ensemble des capteurs 12. Tous les capteurs 12 étant alimentés par la même valeur de haute tension, les signaux délivrés seront alors différents de par les différences de gain et de rendement de détection de chaque capteur 12.

Selon un aspect de l'invention, le capteur 12 de chaque spectromètre 6 est couplé au module de détection 14 associé de ce spectromètre 6. Le capteur 12 et le module de détection 14 associé sont calibrés conjointement.

Selon un mode de réalisation, le module de détection 14 de chaque spectromètre 6 est réglé initialement de façon que les signaux fournis par les différents couples capteur 12 / module de détection 14 soient identiques et linéaires ou sensiblement identiques et linéaires dans les mêmes conditions de mesure.

Avantageusement, chaque couple capteur 12 / module de détection 14 est réglé en ajustant le gain du photomultiplicateur 34 couplé au cristal 32 du capteur 12 puis en réglant le module de détection 14, par exemple en réglant le régulateur proportionnel 38 du module de détection 14.

Ainsi, selon l'invention, le réglage s'effectue au niveau de chaque couple capteur 12 / module de détection 14, et non au niveau de chaque capteur 12. Ceci permet de tenir compte de la dispersion entre les capteurs 12 et entre les modules de détection 14 et d'assurer que chaque spectromètre 6 fournit sensiblement le même spectre net en présence d'une même source de rayonnements.

Le réglage initial de chaque spectromètre 6 est effectué par exemple en présence d'au moins une source étalon S1, S2. Le régulateur proportionnel 38 du module de détection 14 est réglé de façon que les signaux de sortie fournis par le module de détection 14 correspondent aux valeurs attendues en présence de la source étalon S1, S2.

Il en résulte que chaque capteur 12 et le module de détection 14 associé à celui-ci forment un couple indissociable. Deux modules de détection 14 ne peuvent être intervertis sans intervertir les deux capteurs 12 associés et un capteur 12 ne peut être remplacé sans lui associer son module de détection propre 14.

Les capteurs 12 sont alimentés par la même valeur de haute tension et sont avantageusement alimentés par la même source d'énergie électrique haute tension 18. Ceci simplifie l'alimentation des capteurs 12 et les opérations de maintenance. Pour d'autres raisons tel que le principe de redondance mis en oeuvre dans les installations nucléaires, comme illustré sur la figure 1, il est possible de prévoir une source d'énergie électrique haute tension 18 commune à, par exemple, deux capteurs 12. Sur la figure 1, les spectromètres 6 sont groupés par deux, les deux capteurs 12 des spectromètres 6 de chaque groupe étant alimentés par la même source d'énergie électrique haute tension 18.

Chaque capteur 12 peut présenter une dérive au cours du temps et les capteurs 12 peuvent présenter des dérives différentes.

Selon un aspect de l'invention, le dispositif de spectrométrie photonique 2 comprend au moins une source étalon S1, S2 commune aux différents spectromètres 6 pour la correction de dérive des capteurs 12. Les capteurs 12 sont disposés de manière symétrique autour de chaque source étalon S1, S2. Ainsi, la correction de dérive des capteurs 12 est effectuée à partir de la même source étalon S1, S2 ce qui est une garantie supplémentaire pour le respect du principe d'ergodicité.

La dérive de chaque capteur 12 est corrigée par recalage de chaque spectre de mesures en fonction de la raie spectrale caractéristique mesurée correspondant à la ou chaque source étalon S1, S2 et de la raie de référence de la ou chaque source étalon S1, S2 de façon à déterminer un spectre net des rayonnements émis par le produit 4 et la ou chaque source étalon S1, S2.

Selon un aspect de l'invention, le dispositif de spectrométrie photonique 2 comprend au moins une source étalon S1 possédant une énergie de référence supérieure à celle d'un élément à détecter.

L'isotope 235 de l'uranium présente entre autres une émission de photons gamma caractéristique à la valeur de 185,7 keV. Un dispositif de spectrométrie photonique 2 adapté à la détection de l'isotope 235 de l'uranium comprend par exemple une source étalon en césium 137 présentant une émission de photons gamma caractéristique de référence à la valeur de 662 keV dont l'influence sur les comptes pour l'énergie 185,7 keV, c'est-à-dire les résultats du comptage sur l'intervalle de mesure fournis par le module d'analyse 16, est facilement rendue négligeable.

En assurant que chaque voie spectrométrique présente une caractéristique de linéarité de réponse, il est possible de corriger le spectre de mesures en fonction de la différence entre la valeur mesurée pour une source étalon et la valeur de référence de la source étalon. Une erreur - en valeur relative - de X% sur la mesure de la valeur de référence de la source étalon entraîne une correction - en valeur relative - de X% de toutes les valeurs mesurées.

Il en résulte qu'une petite dérive de mesure en valeur absolue sur l'énergie de référence d'une source étalon entraîne une correction plus grande en valeur absolue sur toutes les mesures d'énergies supérieures à celle de la source étalon et une correction plus petite en valeur absolue sur toutes les mesures d'énergies inférieures à celle de la source étalon. Cela entraîne que pour une incertitude de mesure donnée, l'incertitude est plus élevée pour toutes les mesures d'énergies supérieures à celle de la source étalon et est inférieure pour toutes les mesures d'énergies inférieures à celle de la source étalon.

Le choix d'une source étalon d'énergie supérieure à celle d'un élément à détecter permet donc de minimiser les incertitudes de mesure en valeur absolue dans les plages d'énergie correspondant à celle de l'élément à détecter.

Selon un aspect de l'invention le dispositif de spectrométrie photonique 2 comprend deux sources étalons S1 et S2 possédant des raies spectrales caractéristiques dont les énergies de référence sont différentes.

De préférence, les énergies de références des sources étalons S1 et S2 sont choisies de façon à présenter une énergie d'émission qui se situe pour l'une d'entre elles à une des deux extrémités de la bande d'analyse spectrale en énergie d'un spectromètre 6 et pour l'autre d'entre elles à l'autre extrémité de la bande d'analyse spectrale en énergie du même spectromètre 6. Ainsi, avec deux sources fournissant deux énergies différentes et les plus distantes possibles sur l'étendue spectrale d'analyse, la correction est optimale pour l'ensemble des photons détectables sur cette bande d'analyse en énergie.

L'isotope 235 de l'uranium présente entre autres une émission de photons gamma caractéristique à la valeur de 185,7 keV. Un dispositif de spectrométrie photonique 2 adapté à la détection de l'uranium 235 comprend par exemple une source étalon en américium 241 présentant une énergie de référence de 59.5 keV et donc une raie de référence sur le spectre en énergie autour de l'abscisse 60 keV et une source étalon en césium 137 présentant une énergie de référence de 662 keV et donc une raie de référence sur le spectre en énergie autour de l'abscisse 662 keV.

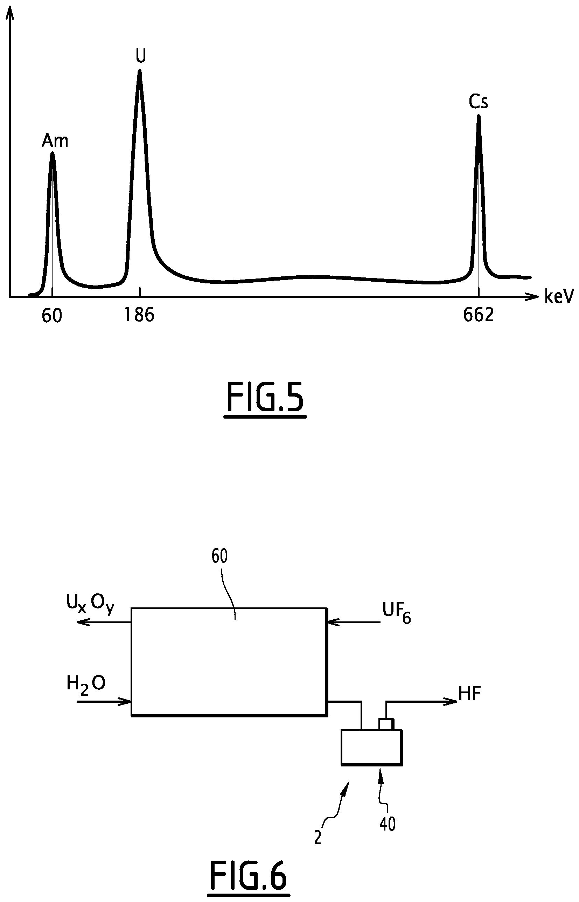

La figure 5 illustre un exemple de spectre pouvant être obtenu en présence d'une source étalon d'américium 241, d'une source étalon de césium 137 et d'un échantillon contenant de l'uranium 235. L'abscisse représente l'énergie en keV des photons reçus et l'ordonnée le nombre de photons détectés.

La correction de dérive est effectuée en corrigeant chaque spectre de mesures en fonction de la raie spectrale caractéristique mesurée et de la raie de référence de chaque source étalon S1, S2, ce qui garantit une correction plus précise.

Les fonctions affines de recalage sont déterminées de façon que les raies caractéristiques mesurées des sources étalons S1, S2 utilisées coïncident, en énergie et en comptage, avec les raies de référence respectives des sources étalons S1, S2 puis appliquées à chaque point du spectre de mesures.

La plupart des capteurs de photons comprennent une source étalon - par exemple américium 241 - placée dans le capteur scellé voire scellée au cristal lors de leur fabrication. Soumises à la législation sur les sources scellées, les sources étalons ont une durée de vie réglementaire limitée. La source et donc le capteur doivent être détruits à la fin de la durée de vie réglementaire, quelle que soit l'état du capteur, ce qui limite la durée de vie du capteur. De même, si un capteur est défectueux, le capteur complet est remplacé et la source étalon est détruite avec le capteur.

L'utilisation d'une source étalon associée à un capteur mais physiquement séparée du capteur permet de limiter le coût de fonctionnement de l'ensemble en limitant le coût de remplacement d'un capteur et en permettant de conserver le capteur même si la source étalon doit être remplacée et vice versa. Cela permet en outre d'utiliser une même source étalon pour plusieurs capteurs, ce qui permet non seulement de limiter le coût de l'ensemble de mesure mais également d'assurer une meilleure adéquation à la contrainte d'ergodicité d'un dispositif utilisant plusieurs capteurs simultanément.

Dans un mode de réalisation, au moins une fonction de recalage pour le recalage des spectres de mesures d'un spectromètre 6 est déterminée pour chaque spectre de mesures fourmi par le spectromètre 6. En variante, au moins une fonction de recalage pour le recalage des spectres de mesures d'un spectromètre 6 est déterminée à partir d'au moins un spectre de mesures de référence du spectromètre 6 de façon à faire coïncider, pour chaque source étalon (S1, S2), une raie spectrale caractéristique du spectre de mesures de référence avec la raie spectrale de référence de cette source étalon S1, S2. La ou chaque fonction de recalage est utilisée pour recaler plusieurs spectres de mesures successifs du spectromètre 6. La ou chaque fonction de recalage est déterminée périodiquement selon une périodicité qui dépend de la stabilité du spectromètre 6. La périodicité peut être de l'ordre du jour, de la semaine ou plus.

Les figures 6 à 8 illustrent schématiquement des installations industrielles 30 utilisant un dispositif de spectrométrie photonique 2 selon l'invention pour contrôler la teneur en radio-isotopes de coproduit et d'effluents de rejet.

La figure 6 illustre une installation de conversion d'hexafluorure d'uranium en oxyde d'uranium comprenant un four 60 recevant, entre autres, en entrée de l'hexafluorure d'uranium UF₆ et de l'eau H₂O circulant à contre-courant dans le four 60, et fournissant en sortie de l'oxyde d'uranium UₓO_{y} en tant que produit et de l'acide fluorhydrique HF en tant que coproduit.

Tel qu'illustré, le pot 40 du dispositif de spectrométrie photonique 2 est disposé en série sur une sortie d'acide fluorhydrique après condensation en HF liquide de façon à vérifier que la teneur de l'acide fluorhydrique en uranium 235 est inférieure aux seuils réglementaires.

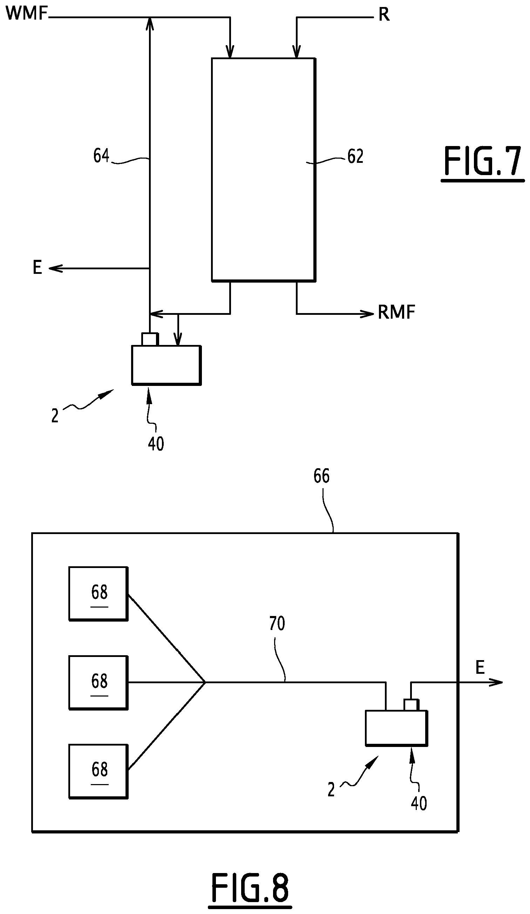

La figure 7 illustre une installation de recyclage de matières radioactives comprenant un réacteur 62 recevant en entrée des déchets contenant de la matière radioactive WMF et des réactifs R propres à précipiter la matière radioactive, et fournissant en sortie de la matière radioactive recyclée RMF et des effluents E.

Tel qu'illustré, le pot 40 du dispositif de spectrométrie photonique 2 est disposé en dérivation (en parallèle) sur une sortie d'effluents E de façon à vérifier que la teneur des effluents E en radio-isotopes, par exemple certains radio-isotopes du thorium, l'uranium 235, le plomb 212,..., ou en d'autres impuretés radioactives issues par exemple de la mise en oeuvre d'uranium issu du traitement de combustibles irradiés, dit uranium de retraitement, de plutonium... est inférieure aux seuils réglementaires.

L'installation de recyclage comprend une conduite de recirculation 64 s'étendant entre la sortie du pot 40 de mesurage du dispositif de spectrométrie photonique 2 et l'entrée en déchets WMF, de sorte que les effluents E sont recyclés tant qu'ils présentent une teneur en un ou plusieurs radio-isotopes trop élevée.

La figure 8 illustre un ensemble de traitement de matières radioactives 66 comprenant plusieurs installations 68 de traitement de matières radioactives produisant des effluents E, collectés dans un circuit d'évacuation en vue de leur rejet.

Le dispositif de spectrométrie photonique 2 est disposé dans le circuit de rejet de façon à vérifier que les effluents E collectés présentent une teneur en radio-isotopes conformes aux seuils réglementaires de rejet.

Le dispositif de spectrométrie photonique 2 est installé dans une conduite principale 70 pour effectuer les mesures sur l'ensemble des effluents E ou sur une conduite de dérivation pour effectuer les mesures sur une fraction des effluents E collectés.

Il est possible d'utiliser le dispositif de spectrométrie photonique 2 de façon à déterminer l'origine d'une pollution des effluents par de la matière radioactive. En effet, en fonction du processus industriel à l'origine par exemple d'une pollution à l'uranium, des éléments chimiques caractéristiques du processus mis en oeuvre peuvent être associés à l'uranium. Par exemple, une présence de plomb 212 en association avec de l'uranium 235 est le signe d'une pollution provenant d'une installation utilisant de l'uranium de retraitement.

Ainsi, selon un aspect de l'invention, le module de traitement 8 du dispositif de spectrométrie photonique 2 est configuré pour déterminer à partir du spectre global la présence de radio-isotopes en sus, par exemple, de l'uranium 235.

De façon générale, le choix de la mise en oeuvre du dispositif de spectrométrie photonique 2 en série ou en dérivation sur une sortie du produit 4 à contrôler dépend de l'installation 30 et du débit du produit en ligne de sortie.

Selon une option, le module de traitement 8 comprend une mémoire dans laquelle sont stockés des spectres de référence caractéristiques de certains types de pollution, et est configuré pour, par exemple, émettre une alerte ou déclencher un arrêt de l'installation 30 en cas de correspondance d'un spectre net avec un spectre de référence préenregistré.

Grâce à l'invention, il est possible d'effectuer des mesures rapides de rayonnements gamma et/ou X compatibles avec la surveillance ou le pilotage de processus industriels. Le dispositif de spectrométrie photonique est réalisable à partir d'éléments du commerce et peut être disposé *in situ* à proximité ou dans une installation pour contrôler les produits fournis par cette installation et/ou piloter l'installation.

L'invention s'applique en particulier à la mesure de la teneur en uranium 235 en sortie de processus de fabrication de combustible nucléaire à base d'uranium ou de processus de recyclage d'uranium. De manière générale, l'invention s'applique à la mesure de la teneur en tout élément radioactif.

L'invention s'applique pour la mesure de tout rayonnement gamma ou X. Les spectromètres de l'invention sont des spectromètres photoniques gamma et/ou X selon le scintillateur utilisé.

## Revendications

1. Dispositif de spectrométrie photonique (2), **caractérisé en ce qu'**il comprend au moins une source étalon (S1, S2), plusieurs spectromètres (6) photoniques identiques, chaque spectromètre (6) comprenant un capteur (12) de rayonnements et étant propre à fournir un spectre de mesures correspondant aux mesures du capteur (12) pendant un intervalle de temps, les spectromètres (6) étant propres à effectuer des mesures simultanément sur un même produit (4) émettant des rayonnements et sur la ou chaque source étalon (S1, S2) et à fournir des spectres de mesures pour un même intervalle de temps, et des moyens de traitement (8, 16) propres à déterminer un spectre net à partir de chacun des spectres de mesures fournis par les spectromètres (6) pour un même intervalle de temps, par recalage du spectre de mesure fourni par chaque spectromètre (6) en fonction d'une raie spectrale du spectre de mesures correspondant à l'au moins une source étalon (S1, S2), et d'une raie de référence de la ou chaque source étalon (S1, S2), et à déterminer un spectre global résultant de la sommation des spectres nets déterminés pour un même intervalle de temps.

2. Dispositif de spectrométrie photonique selon la revendication 1, dans lequel chaque spectromètre (6) comprend un module de détection (14) propre à convertir un signal électrique émis par le capteur (12) à la détection d'un photon et proportionnel à l'énergie du photon détecté, en un signal numérique représentatif de l'énergie du photon détecté.

3. Dispositif de spectrométrie photonique selon la revendication 2, dans lequel chaque module de détection (14) est réglable de façon à ajuster le signal numérique fourni par le module de détection (14) en fonction du signal émis par le capteur (12) associé.

4. Dispositif de spectrométrie photonique selon la revendication 3, dans lequel chaque spectromètre (6) est réglé initialement par calibrage du module de détection (14) de telle manière que les couples capteur (12) / module de détection (14) des spectromètres (6) émettent sensiblement le même signal numérique en présence d'une même source de rayonnements.

5. Dispositif de spectrométrie photonique selon l'une quelconque des revendications précédentes, comprenant au moins une source étalon (S1, S2) émettrice de rayonnements commune aux spectromètres (6), chaque capteur (12) des spectromètres (6) recevant statistiquement sensiblement une même quantité de photons en provenance de la ou de chaque source étalon (S1, S2) pour un même intervalle de temps.

6. Dispositif de spectrométrie photonique selon la revendication 5 comprenant au moins deux sources étalons (S1, S2) différentes communes aux spectromètres (6).

7. Dispositif de spectrométrie photonique selon la revendication 6, comprenant deux sources étalons (S1, S2) possédant des raies spectrales de référence respectives situées de part et d'autre d'une raie spectrale caractéristique d'un élément à détecter, notamment de part et d'autre d'une raie spectrale caractéristique de l'uranium 235.

8. Dispositif de spectrométrie photonique selon l'une quelconque des revendications précédentes, dans lequel les moyens de traitement (8, 16) sont propres à déterminer chaque spectre net par recalage de chaque spectre de mesures en fonction d'une raie spectrale caractéristique du spectre de mesures correspondant à la ou chaque source étalon (S1, S2) et d'une raie de référence de la ou chaque source étalon (S1, S2).

9. Dispositif de spectrométrie photonique selon l'une quelconque des revendications 1 à 7, dans lequel les moyens de traitement (8, 16) sont propres à déterminer au moins une fonction de recalage pour le recalage des spectres de mesures d'un spectromètre (6) à partir d'un spectre de mesures de référence du spectromètre (6), la ou chaque fonction de recalage étant déterminée de façon à faire coïncider, pour chaque source étalon (S1, S2), une raie spectrale caractéristique du spectre de mesures de référence avec la raie spectrale de référence de cette source étalon (S1, S2).

10. Dispositif de spectrométrie photonique selon l'une quelconque des revendications précédentes, pour la mesure des rayonnements gamma ou pour la mesure des rayonnements X.

11. Procédé de spectrométrie photonique, comprenant les étapes de :
- fournir des spectres de mesures à l'aide de spectromètres (6) identiques, chaque spectre de mesures résultant de mesures effectuées sur un même produit (4) émettant des rayonnements et d'au moins une source étalon (S1, S2) pendant un même intervalle de temps par un spectromètre (6) respectif ;
- déterminer un spectre net à partir de chaque spectre de mesures par recalage du spectre de mesures en fonction d'au moins une raie spectrale du spectre de mesures fourni par le spectromètre (6), la ou chaque raie spectrale correspondant à une source étalon (S1, S2), et de la raie de référence de la ou de chaque source étalon (S1, S2) ;
- déterminer un spectre global résultant de la sommation des spectres nets.

12. Procédé selon la revendication 11, dans lequel on détermine chaque spectre net à partir de chaque spectre de mesures fourni par un spectromètre (6) par recalage du spectre de mesures en fonction d'une raie spectrale du spectre de mesures fourni par le spectromètre (6), la raie spectrale correspondant à au moins une source étalon (S1, S2) et de la raie de référence de la ou de chaque source étalon (S1, S2).

13. Procédé selon la revendication 11, dans lequel on détermine au moins une fonction de recalage pour le recalage des spectres de mesures d'un spectromètre (6) à partir d'un spectre de mesures de référence fourni par le spectromètre (6), la ou chaque fonction de recalage étant déterminée pour faire coïncider, pour la ou chaque source étalon (S1, S2), une raie spectrale caractéristique du spectre de mesures de référence avec la raie spectrale de référence de cette source étalon (S1, S2).

14. Procédé de calibrage d'un dispositif de spectrométrie photonique selon la revendication 3 ou 4, comprenant l'étape de régler un module de détection (14) propre à convertir un signal électrique de sortie du capteur (12) de chaque spectromètre (6) en un signal numérique représentatif de l'énergie de chaque photon détecté de manière que les spectromètres (6) fournissent des spectres sensiblement identiques en présence d'une même source de rayonnements.

15. Utilisation d'un dispositif de spectrométrie photonique selon l'une quelconque des revendications 1 à 10, pour mesurer la teneur en uranium 235 d'acide fluorhydrique résultant de la fabrication d'oxyde d'uranium, pour mesurer la teneur en au moins un radio-isotope des effluents d'une installation de recyclage de matières radioactives ou pour mesurer avant rejet la teneur en au moins un radio-isotope des effluents d'une usine de traitement de matières radioactives.

## Patentansprüche

1. Photonenspektrometrie-Vorrichtung (2), **dadurch gekennzeichnet, dass** sie aufweist mindestens eine Standardquelle (S1, S2), mehrere identische photonische Spektrometer (6), wobei jedes Spektrometer (6) einen Sensor (12) für Strahlung aufweist und imstande ist, ein Messspektrum bereitzustellen, welches zu den Messungen des Sensors (12) während eines Zeitintervalls korrespondiert, wobei die Spektrometer (6) imstande sind, gleichzeitig Messungen durchzuführen an einem gleichen Erzeugnis (4), welches Strahlung emittiert, und an der oder jeder Standardquelle (S1, S2), und Messspektren für ein gleiches Zeitintervall bereitzustellen, und Verarbeitungsmittel (8, 16), die imstande sind, ein Nettospektrum ausgehend von jedem der Messspektren, die mittels der Spektrometer (6) für ein gleiches Zeitintervall bereitgestellt werden, zu ermitteln mittels Korrigierens des Messspektrums, welches mittels jedes Spektrometers (6) bereitgestellt wird, abhängig von einer Spektrallinie des Messspektrums, welches zu der mindestens einen Standardquelle (S1, S2) korrespondiert, und von einer Referenzlinie der oder jeder Standardquelle (S1, S2), und ein Gesamtspektrum zu ermitteln, welches aus dem Summieren der Nettospektren resultiert, die für ein gleiches Zeitintervall ermittelt werden.

2. Photonenspektrometrie-Vorrichtung gemäß Anspruch 1, wobei jedes Spektrometer (6) ein Detektionsmodul (14) aufweist, welches imstande ist, ein elektrisches Signal, welches mittels des Sensors (12) bei der Detektion eines Photons emittiert wird und proportional zur Energie des detektierten Photons ist, in ein digitales Signal zu konvertieren, welches repräsentativ für die Energie des detektierten Photons ist.

3. Photonenspektrometrie-Vorrichtung gemäß Anspruch 2, wobei jedes Detektionsmodul (14) steuerbar ist, um das digitale Signal einzustellen, welches mittels des Detektionsmoduls (14) abhängig von dem Signal, das mittels des assoziierten Sensors (12) emittiert wird, bereitgestellt wird.

4. Photonenspektrometrie-Vorrichtung gemäß Anspruch 3, wobei jedes Spektrometer (6) anfänglich gesteuert wird mittels Korrigierens des Detektionsmoduls (14) in einer Weise, dass die Paare Sensor (12) / Detektionsmodul (14) der Spektrometer (6) in Anwesenheit einer gleichen Strahlungsquelle im Wesentlichen das gleiche digitale Signal emittieren.

5. Photonenspektrometrie-Vorrichtung gemäß irgendeinem der vorherigen Ansprüche, welche mindestens eine Standardquelle (S1, S2) aufweist, die Strahlung emittiert, die den Spektrometern (6) gemeinsam ist, wobei jeder Sensor (12) der Spektrometer (6) statistisch im Wesentlichen eine gleiche Anzahl an Photonen aus der oder jeder Standardquelle (S1, S2) für ein gleiches Zeitintervall empfängt.

6. Photonenspektrometrie-Vorrichtung gemäß Anspruch 5, welche mindestens zwei unterschiedliche Standardquellen (S1, S2) aufweist, die den Spektrometern (6) gemeinsam sind.

7. Photonenspektrometrie-Vorrichtung gemäß Anspruch 6, welche zwei Standardquellen (S1, S2) aufweist, welche jeweilige Referenz-Spektrallinien haben, die sich beiderseits einer charakteristischen Spektrallinie eines zu detektierenden Elements befinden, insbesondere beiderseits einer charakteristischen Spektrallinie von Uran 235.

8. Photonenspektrometrie-Vorrichtung gemäß irgendeinem der vorherigen Ansprüche, wobei die Verarbeitungsmittel (8, 16) imstande sind, jedes Nettospektrum zu ermitteln mittels Korrigierens von jedem Messspektrum abhängig von einer charakteristischen Spektrallinie des Messspektrums, welches zu der oder jeder Standardquelle (S1, S2) korrespondiert, und von einer Referenzlinie der oder jeder Standardquelle (S1, S2).

9. Photonenspektrometrie-Vorrichtung gemäß irgendeinem der Ansprüche 1 bis 7, wobei die Verarbeitungsmittel (8, 16) imstande sind, mindestens eine Korrekturfunktion zu ermitteln für das Korrigieren der Messspektren eines Spektrometers (6) ausgehend von einem Referenz-Messspektrum des Spektrometers (6), wobei die oder jede Korrekturfunktion ermittelt wird, sodass für jede Standardquelle (S1, S2) eine charakteristische Spektrallinie des Referenz-Messspektrums mit der Referenz-Spektrallinie dieser Standardquelle (S1, S2) übereinstimmt.

10. Photonenspektrometrie-Vorrichtung gemäß irgendeinem der vorherigen Ansprüche zum Messen von Gammastrahlung oder zum Messen von Röntgenstrahlung.

11. Verfahren zur Photonenspektrometrie, welches die folgenden Schritte aufweist:
- Bereitstellen von Messspektren mit Hilfe von identischen Spektrometern (6), wobei jedes Messspektrum resultiert aus Messungen, die an einem gleichen Erzeugnis (4), welches Strahlung emittiert, und an mindestens einer Standardquelle (S1, S2) durchgeführt werden während eines gleichen Zeitintervalls mittels eines jeweiligen Spektrometers (6),
- Ermitteln eines Nettospektrums ausgehend von jedem Messspektrum mittels Korrigierens des Messspektrums abhängig von mindestens einer Spektrallinie des Messspektrums, welches mittels des Spektrometers (6) bereitgestellt wird, wobei die oder jede Spektrallinie zu einer Standardquelle (S1, S2) korrespondiert, und von der Referenz-Linie der oder jeder Standardquelle (S1, S2),
- Ermitteln eines Gesamtspektrums, welches aus dem Summieren der Nettospektren resultiert.

12. Verfahren gemäß Anspruch 11, wobei jedes Nettospektrum ermittelt wird ausgehend von jedem Messspektrum, welches mittels eines Spektrometers (6) bereitgestellt wird, mittels Korrigierens des Messspektrums abhängig von einer Spektrallinie des Messspektrums, welches mittels des Spektrometers (6) bereitgestellt wird, wobei die Spektrallinie zu mindestens einer Standardquelle (S1, S2) korrespondiert, und von der Referenz-Linie der oder jeder Standardquelle (S1, S2).

13. Verfahren gemäß Anspruch 11, wobei mindestens eine Korrekturfunktion für das Korrigieren der Messspektren eines Spektrometers (6) ermittelt wird ausgehend von einem Referenz-Messspektrum, welches mittels des Spektrometers (6) bereitgestellt wird, wobei die oder jede Korrekturfunktion ermittelt wird, sodass für die oder jede Standardquelle (S1, S2) eine charakteristische Spektrallinie des Referenz-Messspektrums mit der Referenz-Spektrallinie dieser Standardquelle (S1, S2) übereinstimmt.

14. Verfahren zum Kalibrieren einer Photonenspektrometrie-Vorrichtung gemäß Anspruch 3 oder 4, aufweisend den Schritt des Steuern eines Detektionsmoduls (14), welches imstande ist, ein elektrisches Signal am Ausgang des Sensors (12) von jedem Spektrometer (6) in ein digitales Signal umzuwandeln, welches repräsentativ ist für die Energie von jedem detektierten Photon, auf eine Weise, dass die Spektrometer (6) Spektren bereitstellen, die in Anwesenheit einer gleichen Strahlungsquelle im Wesentlichen identisch sind.

15. Verwendung einer Photonenspektrometrie-Vorrichtung gemäß einem der Ansprüche 1 bis 10 zum Messen des Uran-235-Gehalts an Fluorwasserstoffsäure, die sich bei der Herstellung von Uranoxid ergibt, zum Messen des Gehalts von mindestens einem Radioisotop der Abwässer einer Wiederverwertungsanlage für radioaktive Stoffe oder zum Messen des Gehalts von mindestens einem Radioisotop der Abwässer einer Anlage zur Verarbeitung radioaktiver Stoffe vor der Ableitung.

## Claims

1. A photonic spectrometry device (2), **characterized in that** it comprises at least one calibration source (S1, S2), several identical photon spectrometers (6), each spectrometer (6) comprising a radiation sensor (12) and being capable of providing a measurement spectrum corresponding to the measurements of the sensor (12) during a time interval, the spectrometers (6) being capable of performing measurements simultaneously on one same radiation-emitting product (4) and on the or each calibration source (S1, S2) and of providing measurement spectra for one same time interval, and processing means (8, 16) capable of determining a net spectrum from each of the measurement spectra provided by the spectrometers (6) in one same time interval, by aligning the measurement spectrum provided by each spectrometer (6) in relation to a spectral line of the measurement spectrum corresponding to the at least one calibration source (S1, S2), and in relation to a reference line of the or of each calibration source (S1, S2), and of determining a global spectrum resulting from the summation of the net spectra determined for one same time interval.

2. The photonic spectrometry device according to claim 1 wherein each spectrometer (6) comprises a detection module (14) capable of converting an electric signal emitted by the sensor (12) on detection of a photon and proportional to the energy of the detected photon, to a digital signal representing the energy of the detected photon.

3. The photonic spectrometry device according to claim 2 wherein each detection module (14) is adjustable so as to adjust the digital signal provided by the detection module detection (14) as a function of the signal emitted by the associated sensor (12).

4. The photonic spectrometry device according to claim 3 wherein each spectrometer (6) is initially adjusted by calibrating the detection module (14) such that the sensor (12) / detection module (14) pairs of the spectrometers (6) emit substantially the same digital signal in the presence of one same radiation source.

5. The photonic spectrometry device according to any of the preceding claims comprising at least one radiation-emitting calibration source (S1, S2) common to the spectrometers (6), each sensor (12) of the spectrometers (6) statistically receiving substantially one same quantity of photons derived from the or from each calibration source (S1, S2) in one same time interval.

6. The photonic spectrometry device according to claim 5 comprising at least two different calibration sources (S1, S2) common to the spectrometers (6).

7. The photonic spectrometry device according to claim 6 comprising two calibration sources (S1, S2) having respective reference spectral lines located either side of a characteristic spectral line of an element to be detected, in particular either side of a characteristic spectral line of uranium 235.

8. The photonic spectrometry device according to any of the preceding claims wherein the processing means (8, 16) are capable of determining each net spectrum by aligning each measurement spectrum in relation to a characteristic spectral line of the measurement spectrum corresponding to the or to each calibration source (S1, S2) and in relation to a reference line of the or of each calibration source (S1, S2).

9. The photonic spectrometry device according to any of claims 1 to 7 wherein the processing means (8, 16) are capable of determining at least one alignment function to align the measurement spectra of a spectrometer (6) using a reference measurement spectrum of the spectrometer (6), the or each alignment function being determined so as to cause the coinciding, for each calibration source (S1, S2), of a characteristic spectral line of the reference measurement spectrum with the reference spectral line of this calibration source (S1, S2).

10. The photonic spectrometry device according to any of the preceding claims for the measurement of gamma-rays or for the measurement of X-rays.

11. A photonic spectrometry method comprising the steps of:
- providing measurement spectra using identical spectrometers (6), each measurement spectrum resulting from measurements performed on one same radiation-emitting product (4) and on at least one calibration source (S1, S2) during one same time interval by a respective spectrometer (6);
- determining a net spectrum from each measurement spectrum by aligning the measurement spectrum in relation to at least one spectral line of the measurement spectrum provided by the spectrometer (6), the or each spectral line corresponding to a calibration source (S1, S2) and in relation to the reference line of the or of each calibration source (S1, S2);
- determining a global spectrum resulting from the summation of the net spectra.

12. The method according to claim 11 wherein each net spectrum is determined from each measurement spectrum provided by a spectrometer (6) by aligning the measurement spectrum in relation to a spectral line of the measurement spectrum provided by the spectrometer (6), the spectral line corresponding to at least one calibration source (S1, S2), and in relation to a reference line of the or of each calibration source (S1, S2).

13. The method according to claim 11 wherein at least one alignment function is determined for the alignment of the measurement spectra of a spectrometer (6) from a reference measurement spectrum provided by the spectrometer (6), the or each alignment function being determined so as to cause the coinciding, for the or each calibration source (S1, S2), of a characteristic spectral line of the reference measurement spectrum with the reference spectral line of this calibration source (S1, S2).

14. The method for calibrating a photonic spectrometry device according to claim 3 or 4 comprising the step of adjusting a detection module (14) capable of converting an electric signal output from the sensor (12) of each spectrometer (6) to a digital signal representing the energy of each detected photon so that the spectrometers (6) provide substantially identical spectra in the presence of one same radiation source.

15. The use of a photonic spectrometry device according to any of claims 1 to 10 to measure the uranium 235 content of hydrofluoric acid resulting from the production of uranium oxide, to measure the content of at least one radio-isotope in effluent from a plant recycling radioactive materials or to measure, before discharge, the content of at least one radio-isotope in effluent from a plant treating radioactive materials.
